# EUROPÄISCHE PATENTSCHRIFT

(11) **EP 2 771 967 B1**
(45) Veröffentlichungstag und Bekanntmachung des Hinweises auf die Patenterteilung: **03.04.2019**
(21) Anmeldenummer: 12778614.3
(22) Anmeldetag: 05.10.2012
(51) Int. Cl.: H02K 49/04, H02K 7/11, H02K 1/30

(54) **ANTRIEBSANORDNUNG**
DRIVE ASSEMBLY
DISPOSITIF D'ENTRAÎNEMENT

(30) Priorität: 28.10.2011 DE 102011117118
(43) Veröffentlichungstag der Anmeldung: 03.09.2014
(73) Patentinhaber: SEW-EURODRIVE GmbH & Co. KG, 76646 Bruchsal (DE)
(72) Erfinder: BECKER, Günter, 76684 Östringen (DE); SCHMIDT, Josef, 76676 Graben-Neudorf (DE); SCHWESINGER, Klaus, 76646 Bruchsal (DE); HÄFELE, Jochen, 76646 Bruchsal (DE)
(86) Internationale Anmeldenummer: PCT/EP2012/004176
(87) Internationale Veröffentlichungsnummer: WO 2013/060412

(56) Entgegenhaltungen:
- WO-A1-2010/121303
- DE-A1-102008 031 153
- US-A- 4 866 321

## Beschreibung

Die Erfindung betrifft eine Antriebsanordnung.

Bei einer Anordnung mit an einem metallischen Reaktionsteil vorbeidrehenden Dauermagneten werden Wirbelströme induziert und somit Kräfte erzeugbar.

Aus der DE 10 2008 031 153 A1, DE102009009076A1, DE102009009073A1 und DE102009009071A1 ist jeweils ein Polradscheibenantrieb bekannt.

Aus der WO 2012/121303 A1 ist als nächstliegender Stand der Technik ein magnetisches Antriebssystem bekannt.

Aus der US 4 866 321 A ist ein bürstenloser Elektromotor für die Benutzung in einem Motor oder in einem Generator bekannt.

Der Erfindung liegt daher die Aufgabe zugrunde, eine Antriebsanordnung weiterzubilden, die möglichst optimal auf die Anforderungen der jeweiligen Anlage abgestimmt ist.

Erfindungsgemäß wird die Aufgabe bei der Antriebsanordnung nach den in Anspruch 1 angegebenen Merkmalen gelöst.

Von Vorteil ist dabei, dass ein oder mehr Pakete axial hintereinander auf der Rotorwelle montierbar sind und somit je nach Applikation, also Anzahl parallel zur Schiene verlegter Reaktionsteile, eine entsprechend große Antriebskraft erzeugbar ist. Jedes Paket weist zwei magnetbestückte Scheiben auf, welche somit Antriebskraft erzeugbar machen. Dabei sind die Scheiben in einfacher Weise mittels der Distanzhülse voneinander beabstandet entgegen der anziehend wirkenden Kraft der sich nächstliegend gegenüber stehenden Dauermagnete.

Durch die Bildung von Paketen sind diese als Module im Lager lagerbar und je nach Anforderung und Bedarf dann in einer Antriebsanordnung einsetzbar. Bei Bedarf geringer Antriebskraft wird (nicht erfindungsgemäß) nur ein Paket mit der Rotorwelle verbunden, bei Bedarf an höherer Antriebskraft werden erfindungsgemäß zwei oder mehr Pakete mit der Rotorwelle verbunden. Somit ist ein Baukasten geschaffen, mit welchem eine hohe Varianz von Antriebsanordnungen herstellbar ist. Allerdings muss zur Erzeugung höherer Kräfte auch in Schienenrichtung eine der Anzahl der Pakete entsprechende Anzahl von Reaktionsteilen vorgesehen werden.

Bei der erfindungsgemäßen Antriebsanordnung ist eine Rotorwelle mit einem Nabenteil drehfest verbunden, insbesondere mittels Passfederverbindung,
wobei auf dem Nabenteil mindestens zwei Pakete mit jeweils mindestens zwei Scheiben, angeordnet sind, welche über eine Distanzhülse voneinander beabstandet sind.

Von Vorteil ist dabei, dass zwei Scheiben, deren Dauermagnete derart angeordnet sind an den sich gegenüberstehenden Stirnseiten, dass die sich am nächsten gegenüberstehenden Dauermagnete der beiden Scheiben sich gegenseitig anziehen und somit kein fernwirkendes Magnetfeld entsteht. Die Antriebsanordnung ist also aus großer Entfernung gesehen magnetisch abgeschirmt ausgeführt. Auf diese Weise ist schon ein Paket, also zwei über die zugehörige Distanzhülse voneinander beabstandete Scheiben, einfach transportierbar und lagerbar, da auf andere magnetische Gegenstände und/oder solche Pakete nur geringe magnetische Kräfte wirken.

An jeder Scheibe sind Dauermagnete angeordnet, insbesondere stoffschlüssig und/oder formschlüssig verbunden sind. Von Vorteil ist dabei, dass somit auch bei hohen Drehzahlen und somit Zentrifugalkräften die Dauermagnete fixiert bleiben.

Bei einer vorteilhaften erfindungsgemäßen Ausgestaltung sind die Dauermagnete in Umfangsrichtung regelmäßig voneinander beabstandet und/oder auf den sich gegenüber stehenden Stirnseiten der Scheiben angeordnet und/oder auf gleichem Radialabstand angeordnet. Von Vorteil ist dabei, dass eine einfache Herstellung ermöglicht ist und die Antriebskraft bei der Drehbewegung gleichförmig erzeugt wird.

Bei einer vorteilhaften Ausgestaltung ist die Distanzhülse zwischen den beiden jeweiligen Scheiben, insbesondere eines jeweiligen Pakets, angeordnet. Von Vorteil ist dabei, dass die Beabstandung entgegen der auf die Scheiben anziehend wirkenden Magnetkräfte in einfacher Weise mit der Distanzhülse, welche vorzugsweise aus Metall, insbesondere Stahl oder Aluminium, gefertigt ist, ausführbar ist.

Bei einer vorteilhaften Ausgestaltung ist jede Scheibe schraubverbunden mit einer jeweils zugeordneten Distanzhülse, insbesondere eines jeweiligen Pakets. Von Vorteil ist dabei, dass in Umfangsrichtung mehrere Schrauben anordenbar sind und somit eine stabile Schraubverbindung herstellbar ist.

Bei einer vorteilhaften Ausgestaltung ist das Nabenteil mit der, insbesondere zum jeweiligen Paket zugehörigen, jeweiligen Distanzhülse und/oder zugehörigen Scheiben schraubverbunden, insbesondere wobei eine verwendete Schraube auf einem nicht verschwindenden Radialabstand angeordnet ist und/oder in eine Gewindebohrung des Nabenteils eingeschraubt ist, insbesondere wobei der Schraubenkopf die Scheiben und mindestens eine Distanzhülse auf das Nabenteil, insbesondere in axialer Richtung, drückt. Von Vorteil ist dabei, dass eine sichere und stabile Befestigung ausführbar ist.

Bei einer vorteilhaften Ausgestaltung ist die Rotorwelle von einem Asynchronmotor, Synchronmotor und/oder Reluktanzmotor angetrieben.

Bei einer vorteilhaften Ausgestaltung ist zur axialen Sicherung eine Sicherungsscheibe mit der Rotorwelle schraubverbunden, wobei die Sicherungsscheibe das Nabenteil axial zumindest einseitig sichert,

insbesondere wobei das Nabenteil mittels eines Wellenabsatzes der Rotorwelle auf der anderen axialen Seite axial gesichert ist. Von Vorteil ist dabei, dass eine axiale Sicherung in einfacher Weise ausführbar ist.

Bei einer vorteilhaften Ausgestaltung ist im Beabstandungsbereich jeweils zwischen den Scheiben, zwischen den sich gegenüber stehenden Dauermagneten der Scheiben, ein metallisches, schwertartig ausgeführtes Reaktionsteil, angeordnet, insbesondere wobei die Scheiben entlang dem Reaktionsteil bewegbar angeordnet sind, insbesondere auf einem Mobilteil, welches schienengeführt ist entlang dem Reaktionsteil. Von Vorteil ist dabei, dass hohe Antriebskräfte erzeugbar sind. Insbesondere ist die Schiene einstückig mit dem Reaktionsteil ausführbar und somit eine kompakte Anordnung zur Erzeugung hoher Antriebskräfte herstellbar.

Weitere Vorteile ergeben sich aus den Unteransprüchen.

Die Erfindung wird nun anhand von Abbildungen näher erläutert:
In der Figur 1 ist eine (nicht erfindungsgemäße) Polradscheibenanordnung in Schrägansicht und angeschnitten gezeigt, wobei zwei, jeweils mit Dauermagneten (2, 3) bestückte Scheiben 1 über eine Distanzhülse 6 voneinander beabstandet und verbunden sind.
In der Figur 2 ist eine zugehörige Draufsicht gezeigt.
In der Figur 3 ist ein zugehöriger Schnitt entsprechend der Anschnittsebenen nach Figur 1 gezeigt.
In der Figur 4 ist ein Antrieb gezeigt, der eine von einem Elektromotor angetriebene Polradscheibenanordnung in Schrägansicht und angeschnitten aufweist, wobei vier, jeweils mit Dauermagneten (2, 3) bestückte Scheiben 1 über jeweilige Distanzhülse 6 voneinander beabstandet und verbunden sind.
In der Figur 5 ist ein zugehöriger Querschnitt gezeigt.
In der Figur 6 ist ein (nicht erfindungsgemäßer) Antrieb gezeigt, der eine von einem Elektromotor angetriebene Polradscheibenanordnung in Schrägansicht und angeschnitten aufweist, wobei zwei, jeweils mit Dauermagneten (2, 3) bestückte Scheiben 1 über jeweilige Distanzhülsen 6 voneinander beabstandet und verbunden sind.
In der Figur 7 ist ein zugehöriger Querschnitt ohne den antreibenden Elektromotor gezeigt.
In der Figur 8 ist ein Antrieb gezeigt, der eine von einem Elektromotor angetriebene Polradscheibenanordnung in Schrägansicht und angeschnitten aufweist, wobei zwei, jeweils mit Dauermagneten (2, 3) bestückte Scheiben 1 über jeweilige Distanzhülsen 6 voneinander beabstandet und verbunden sind.
In der Figur 9 ist ein zugehöriger Querschnitt ohne den antreibenden Elektromotor gezeigt.

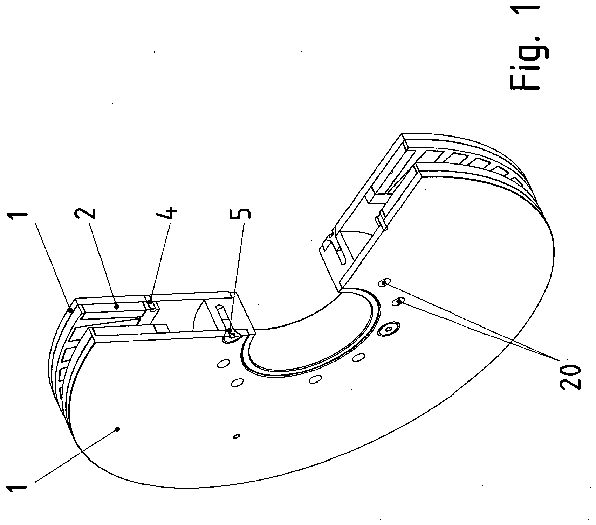

Die in der Figur 1 gezeigte (nicht erfindungsgemäße) Polradscheibenanordnung wird drehfest mit einer Rotorwelle eines Elektromotors verbunden und von diesem somit in Drehbewegung versetzbar. Der Elektromotor ist auf einem schienengeführten Mobilteil befestigt. In Schienenrichtung ist ein schwertartig ausgeformtes Metallteil angeordnet, das zwischen die beiden Scheiben 1 der Polradscheibenanordnung derart hineinragt, dass die an dem Metallteil vorbeidrehenden, an den Scheiben 1 befestigten Dauermagnete (2, 3) Wirbelströme induzieren und somit eine Antriebskraft für das Mobilteil in Schienenrichtung bewirkbar ist.

Die Dauermagnete 2 sind an einer ersten Scheibe 1 und die Dauermagnete 3 an einer zweiten scheibe 1 befestigt, wobei diese beiden Scheiben 1 über die Distanzhülst in axialer Richtung, also in Richtung der Rotorwellenachse des antreibenden Elektromotors, auf Abstand gehalten sind.

Die Dauermagnete (2, 3) sind jeweils an den sich gegenüber stehenden Stirnflächen der Scheiben 1 angeordnet. Dabei werden die Dauermagnete (2, 3) bevorzugt gleichartig ausgeführt, wobei sie jeweils stoffschlüssig, insbesondere mittels Klebstoff, und/oder formschlüssig mit der Scheibe 1 sind. Für die formschlüssige Befestigung ist ein Befestigungsmittel 4 vorgesehen. Somit sind die Dauermagnete (2, 3) in jeweiligen Vertiefungen der Scheiben 1 angeordnet und somit in Umfangsrichtung und in radialer Richtung formschlüssig gehalten.

In Umfangsrichtung sind die auf gleichem Radialabstand angeordneten Dauermagnete (2, 3) gleichmäßig voneinander beabstandet und zu ihrem jeweils nächstbenachbarten Dauermagneten in jeweils umgekehrter Richtung magnetisiert. Die bevorzugte Magnetisierungsrichtung ist dabei in beziehungsweise entgegen der axialen Richtung vorgesehen.

Die Dauermagnete (2, 3) sind vorzugsweise quaderförmig ausgeführt, wobei die längere Ausdehnung in im Wesentlichen radialer Richtung orientiert ist.

Die Scheiben 1 sind schraubverbunden mit der Distanzhülse 6, insbesondere unter Verwendung der Senkschraube 5. Dabei ist die Senkschraube in axialer Richtung ausgerichtet und durch ein Loch der jeweiligen Scheibe 1 geführt und in eine entsprechend axial ausgerichtete Gewindebohrung der Distanzhülse 6 eingeschraubt.

Mittels weiterer Löcher 20, insbesondere axial ausgerichtete Durchgangsbohrungen, ist eine Verschraubung von mehreren, über die Distanzhülse 6 verbundenen Schreiben mit einem auf der Rotorwelle eines Elektromotors vorgesehen Nabenteil ermöglicht.

Das Nabenteil ist vorzugsweise formschlüssig mit der Rotorwelle verbunden.

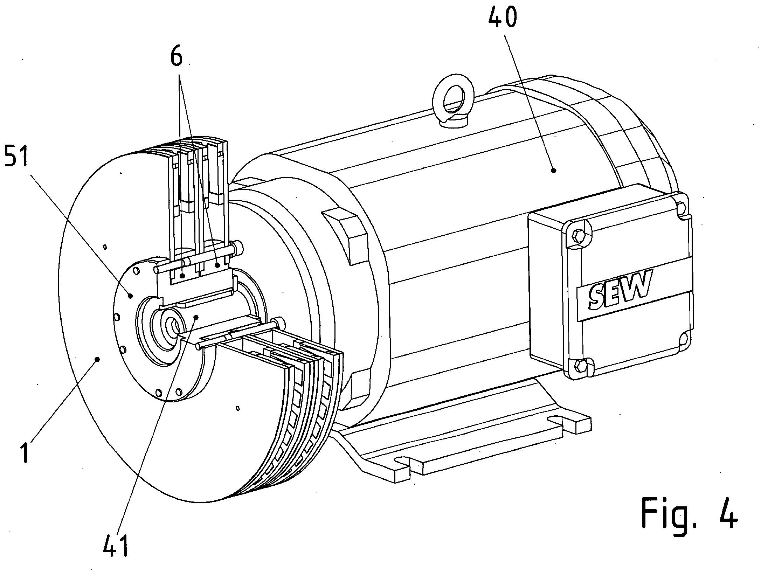

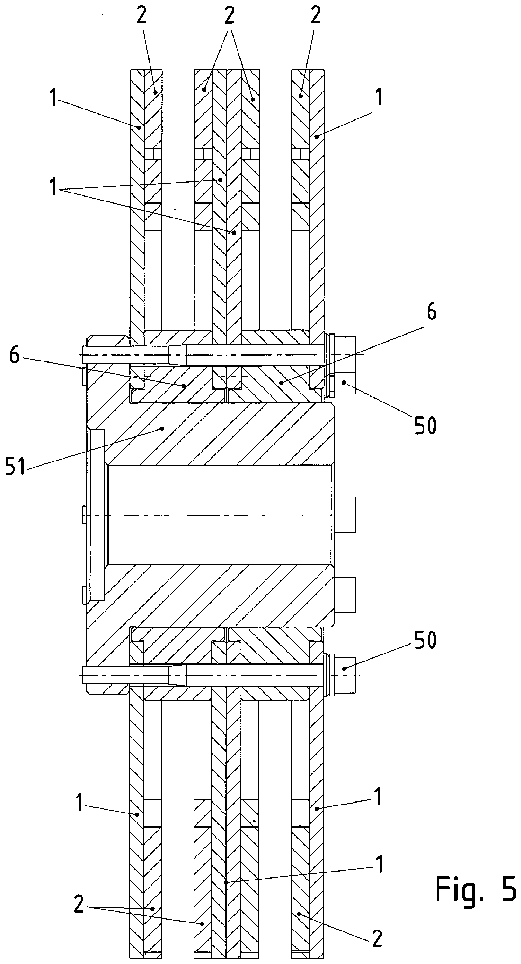

Wie in Figur 4 zusammen mit Figur 5 gezeigt, ist auf der im Elektromotorgehäuse 40 drehbar gelagerten Rotorwelle 41 des Elektromotors ein Nabenteil 51 vorgesehen, das mittels Passfederverbindung mit der Rotorwelle formschlüssig in Umfangsrichtung verbunden ist, also drehfest verbunden ist.

Auf dem Nabenteil 51 sind erfindungsgemäß zwei Paare von Scheiben 1, die voneinander beabstandet sind mittels jeweiliger Distanzhülsen 6, schraubverbunden. Hierzu ist die Schraube 50 durch axial ausgerichtete Ausnehmungen der Distanzhülsen geführt und die beiden axial hintereinander angeordneten Paare samt ihrer zugehörigen Distanzhülsen 6 an einen Absatz des Nabenteils 51 verschraubt. Hierzu ist in dem Nabenteil 51, insbesondere im Absatz des Nabenteils 51 eine jeweilige Gewindebohrung vorgesehen, in welche die jeweilige Schraube 50 eingeschraubt ist.

Die Schraube 50 ist also vorzugsweise als Gewindeschraube ausgeführt. Der Schraubenkopf drückt somit die Paare der Scheiben 1 samt ihrer zugehörigen Distanzhülsen 6 gegen den Absatz am Nabenteil 51.

In Umfangsrichtung sind mehrere Schrauben 50 vorgesehen, so dass eine stabile Verbindung ausführbar ist.

Axial ist das Nabenteil 51 gesichert durch eine Sicherungsscheibe, die einen radialen Bereich des Nabenteils 51 zumindest teilweise überdeckt und mittig an die Rotorwelle 41 angeschraubt ist.

In Schienenrichtung sind erfindungsgemäß zwei parallel angeordnete Reaktionsteile vorgesehen. Jedes dieser reaktionsteile ist als schwertartig ausgeformtes Metallteil ausgeführt, das zwischen die beiden Scheiben 1 eines jeweiligen Paares der Polradscheibenanordnung derart hineinragt, dass die an dem Metallteil vorbeidrehenden, an den Scheiben 1 des jeweiligen Paares befestigten Dauermagnete (2, 3) Wirbelströme induzieren und somit eine Antriebskraft für das Mobilteil in Schienenrichtung bewirkbar ist.

Die Dauermagnete (2, 3) jedes Paares sind also an den einander zugewandten Stirnseiten der Scheiben 1 des jeweiligen Paares vorgesehen. In den Beabstandungsbereich zwischen den Dauermagneten (2, 3) des jeweiligen Paares ragt das in den Figuren nicht gezeigte jeweilige Reaktionsteil hinein.

Der Elektromotor ist als Asynchronmotor ausgeführt.

In weiteren Ausführungsbeispielen ist aber auch ein Synchronmotor oder ein Reluktanzmotor verwendbar.

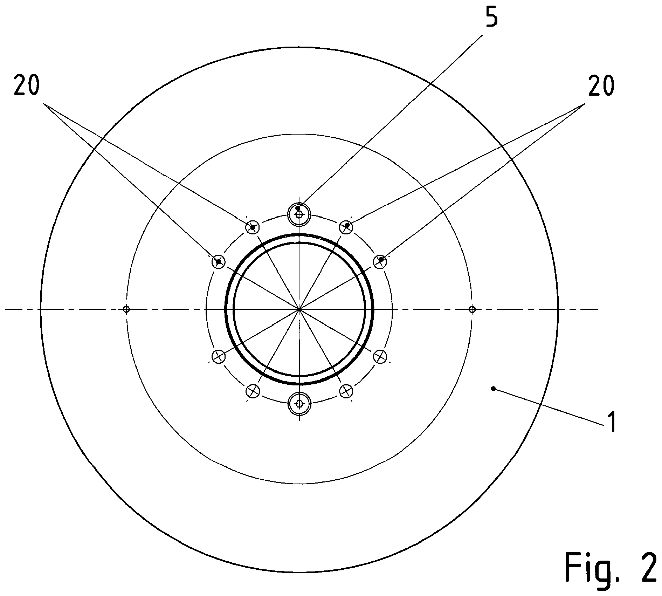

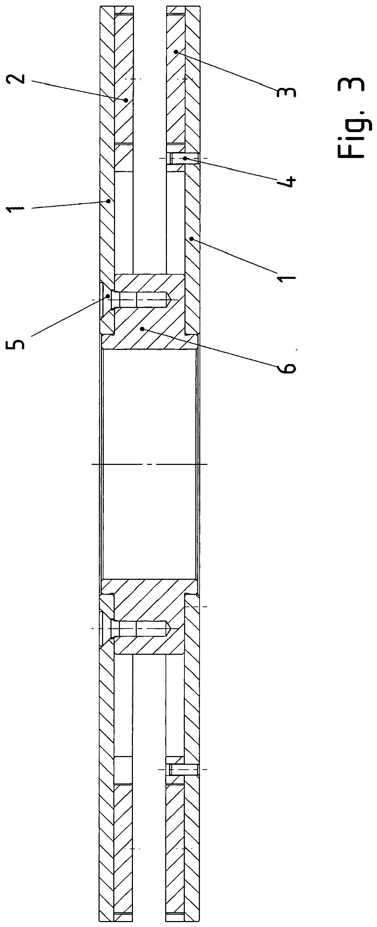

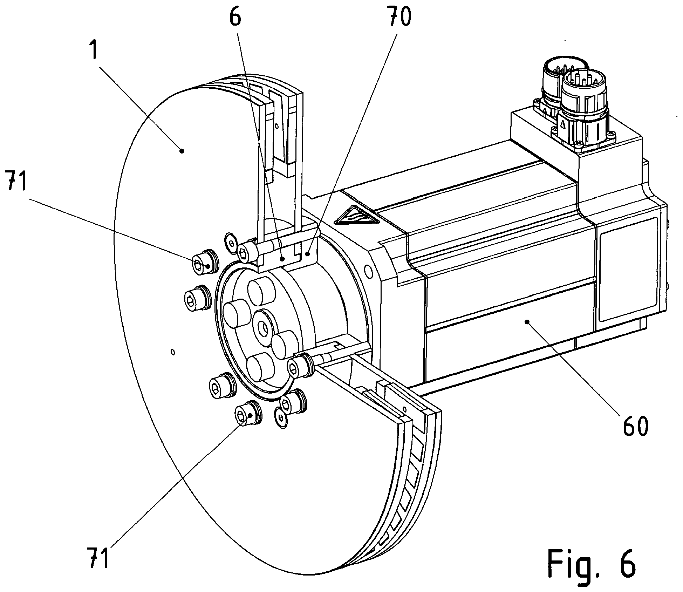

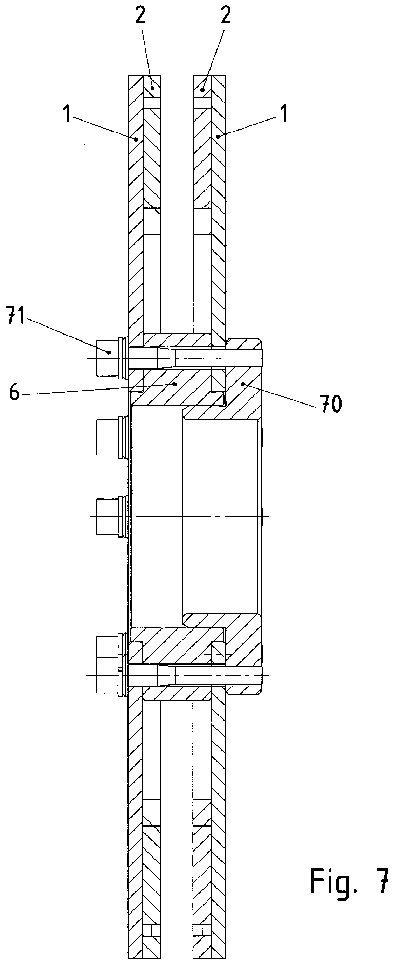

In Figur 6 zusammen mit Figur 7 ist eine (nicht erfindungsgemäße) Polscheibenanordnung gemäß der Figuren 1 bis 3 gezeigt, die auf einem Nabenteil 70 mittels einer Schraube 71 befestigt ist in einer entsprechend der in den Figuren 4 bis 5 beschriebenen Weise. Dabei ist allerdings nur ein einziges Paar an Scheiben 1 verwendet.

Das Nabenteil 70 ist wiederum mit der Rotorwelle eines Elektromotors verbunden, wobei die Rotorwelle drehbar gelagert ist in dem Elektromotorgehäuse 60 des Elektromotors.

Der Elektromotor ist vorzugsweise als Synchronmotor ausgeführt.

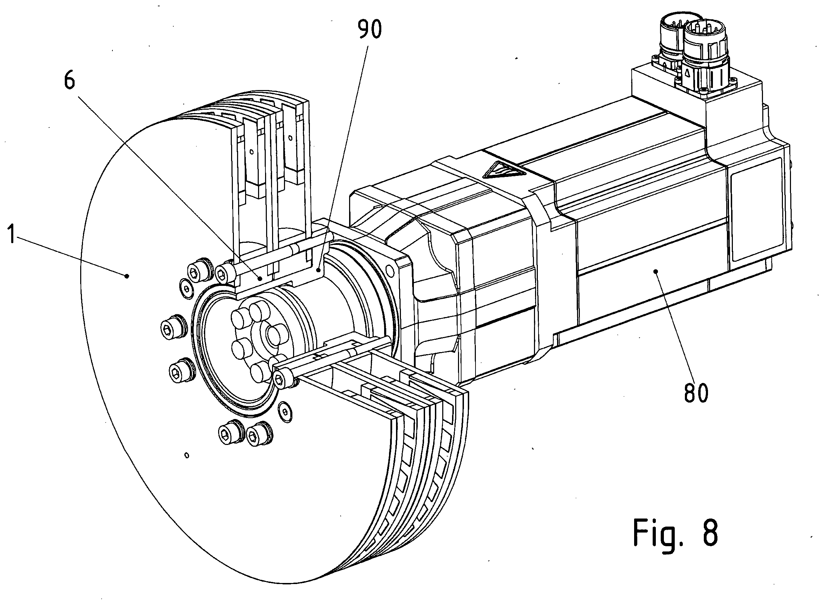

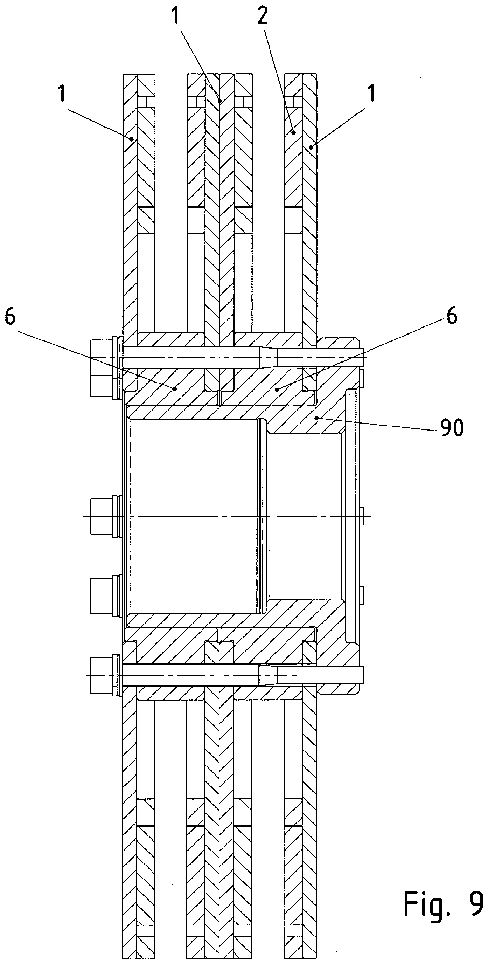

In Figur 8 zusammen mit Figur 9 ist wiederum eine Polradscheibenanordnung gezeigt, die erfindungsgemäß aus zwei Paaren von Scheiben 1 besteht und auf einem Nabenteil 90 mittels Schrauben befestigt ist. Das Nabenteil ist mittels mehrerer nicht mittig angeordneter Schrauben an der Rotorwelle des Elektromotors gesichert, also in Spannverbindungsart oder Flanschverbindungsart. Die Rotorwelle ist drehbar gelagert im Elektromotorgehäuse 80.

Die Distanzhülse 6 und/oder die Scheiben 1 sind vorzugsweise aus Metall, insbesondere Stahl oder Aluminium, gefertigt.

Bei weiteren erfindungsgemäßen Ausführungsbeispielen sind statt der zwei auf dem Nabenteil axial gestapelt angeordneten Pakete, umfassend Distanzhülse mit zwei Scheiben, mehr Pakete angeordnet.

Bei weiteren erfindungsgemäßen Ausführungsbeispielen wird das Nabenteil mit der Rotorwelle kraftschlüssig verbunden, insbesondere also mittels einer Spannverbindung.

Bei weiteren erfindungsgemäßen Ausführungsbeispielen wird die Polradscheibenanordnung stationär aufgebaut und das Mobilteil weist das Reaktionsteil auf, so dass keine elektrische Versorgung des Antriebs auf dem Mobilteil notwendig ist. Somit müssen also elektrische Kabel nur zu dem Elektromotor der stationär aufgestellten Polradschiebenanordnung verlegt werden.

### Bezugszeichenliste

1 Scheibe
2 Dauermagnet
3 Dauermagnet
4 Befestigungsmittel
5 Senkschraube
6 Distanzhülse
20 Löcher, insbesondere axial ausgerichtete Durchgangsbohrungen
50 Schraube
51 Nabenteil
40 Elektromotorgehäuse
41 Rotorwelle
70 Nabenteil
71 Schraube
60 Elektromotor, insbesondere Synchronmotor
80 Elektromotor, insbesondere Synchronmotor
90 Nabenteil

## Patentansprüche

1. Antriebsanordnung zum Antrieb zumindest zweier metallischer schwertartiger Reaktionsteile aufweisend eine Rotorwelle (41), die mit einem Nabenteil (51, 70, 90) drehfest verbunden ist mittels Passfederverbindung oder Spannverbindung,
wobei auf dem Nabenteil (51, 70, 90) mindestens zwei Pakete angeordnet sind,
wobei jedes Paket zumindest jeweils zwei Scheiben (1) aufweist, welche jeweils über eine Distanzhülse (6) voneinander beabstandet sind,
wobei an jeder Scheibe (1) Dauermagnete (2, 3) angeordnet sind,
wobei die Pakete axial hintereinander angeordnet sind,
wobei das Nabenteil (51, 70, 90) mit der, zum jeweiligen Paket zugehörigen Distanzhülse (6) und/oder zugehörigen Scheiben (1) schraubverbunden ist,
wobei eine verwendete Schraube auf einem nicht verschwindenden Radialabstand angeordnet ist und/oder in eine Gewindebohrung des Nabenteils eingeschraubt ist,
wobei der Schraubenkopf die Scheiben (1) und mindestens eine Distanzhülse (6) auf das Nabenteil (51, 70, 90) in axialer Richtung drückt,
wobei jedes metallische schwertartige Reaktionsteil zwischen den sich gegenüberstehenden Dauermagneten (2, 3) der Scheiben (1) des jeweiligen Pakets angeordnet ist,
und wobei die Anzahl der Pakete der Anzahl von Reaktionsteilen entspricht.

2. Antriebsanordnung nach Anspruch 1,
**dadurch gekennzeichnet, dass**
die Dauermagnete (2, 3) in Umfangsrichtung regelmäßig voneinander beabstandet sind und/oder auf den sich gegenüber stehenden Stirnseiten der Scheiben (1) angeordnet sind und/oder auf gleichem Radialabstand angeordnet sind.

3. Antriebsanordnung nach mindestens einem der vorangegangenen Ansprüche,
**dadurch gekennzeichnet, dass**
die Distanzhülse (6) zwischen den beiden jeweiligen Scheiben (1) **eines jeweiligen Pakets** angeordnet ist.

4. Antriebsanordnung nach mindestens einem der vorangegangenen Ansprüche,
**dadurch gekennzeichnet, dass**
jede Scheibe (1) schraubverbunden ist mit einer jeweils zugeordneten Distanzhülse (6), insbesondere eines jeweiligen Pakets.

5. Antriebsanordnung nach mindestens einem der vorangegangenen Ansprüche,
**dadurch gekennzeichnet, dass**
die Rotorwelle (41) von einem Asynchronmotor, Synchronmotor und/oder Reluktanzmotor antreibbar ist.

6. Antriebsanordnung nach mindestens einem der vorangegangenen Ansprüche,
**dadurch gekennzeichnet, dass**
zur axialen Sicherung eine Sicherungsscheibe mit der Rotorwelle (41) schraubverbunden ist, wobei die Sicherungsscheibe das Nabenteil (51, 70, 90) axial zumindest einseitig sichert, insbesondere wobei das Nabenteil (51, 70, 90) mittels eines Wellenabsatzes der Rotorwelle (41) auf der anderen axialen Seite axial gesichert ist.

7. Antriebsanordnung nach mindestens einem der vorangegangenen Ansprüche,
**dadurch gekennzeichnet, dass**
im Beabstandungsbereich zwischen den Scheiben (1), zwischen den sich gegenüber stehenden Dauermagneten (2, 3) der Scheiben (1), jeweils ein metallisches, schwertartig ausgeführtes Reaktionsteil angeordnet ist, wobei die Scheiben (1) entlang dem Reaktionsteil bewegbar angeordnet sind, insbesondere auf einem Mobilteil, welches schienengeführt ist entlang dem Reaktionsteil, oder wobei das Reaktionsteil relativ zu den Scheiben (1) bewegbar angeordnet ist, insbesondere wobei das Reaktionsteil an einem schienengeführten Mobilteil vorgesehen ist.

## Claims

1. Drive assembly for driving at least two metal sword-shaped reaction parts,
comprising a rotor shaft (41) that is connected to a hub part (51, 70, 90) for conjoint rotation by means of a feather key connection or clamp connection,
wherein at least two stacks are arranged on the hub part (51, 70, 90),
wherein each stack comprises at least two discs (1), which are each spaced apart from one another by a spacer bush (6),
wherein permanent magnets (2, 3) are arranged on each disc (1),
wherein the stacks are arranged axially one behind the other,
wherein the hub part (51, 70, 90) is screwed to the spacer bush (6) associated with the particular stack and/or the associated disc (1),
wherein the screw that is used is arranged at a permanent radial spacing and/or is screwed into a threaded hole in the hub part,
wherein the screw head presses the discs (1) and at least one spacer bush (6) onto the hub part (51, 70, 90) in the axial direction,
wherein each metal sword-shaped reaction part is arranged between the opposing permanent magnets (2, 3) of the discs (1) of each stack,
and wherein the number of stacks corresponds to the number of reaction parts.

2. Drive assembly according to claim 1,
**characterised in that**
the permanent magnets (2, 3) are regularly spaced apart from one another in the circumferential direction and/or are arranged on the opposing end faces of the discs (1) and/or are arranged at an equal radial spacing.

3. Drive assembly according to at least one of the preceding claims,
**characterised in that**
the spacer bush (6) is arranged between the two discs (1) of each stack.

4. Drive assembly according to at least one of the preceding claims,
**characterised in that**
each disc (1) is screwed to an associated spacer bush (6), in particular of the particular stack.

5. Drive assembly according to at least one of the preceding claims,
**characterised in that**
the rotor shaft (41) can be driven by an asynchronous motor, a synchronous motor and/or a reluctance motor.

6. Drive assembly according to at least one of the preceding claims,
**characterised in that**
for the purpose of axial securing, a securing disc is screwed to the rotor shaft (41), wherein the securing disc axially secures the hub part (51, 70, 90) at least on one side, wherein the hub part (51, 70, 90) in particular is axially secured on the other axial side by means of a shaft shoulder of the rotor shaft (41).

7. Drive assembly according to at least one of the preceding claims,
**characterised in that**
a metal sword-shaped reaction part is arranged in each case in the spacing region between the discs (1), between the opposing permanent magnets (2, 3) of the discs (1), wherein the discs (1) are arranged so as to be movable along the reaction part, in particular on a mobile part rail-mounted along the reaction part, or wherein the reaction part is arranged movably relative to the discs (1), wherein the reaction part is in particular provided on a rail-mounted mobile part.

## Revendications

1. Dispositif d'entraînement conçu pour entraîner au moins deux pièces de réaction métalliques et ensiformes,
comportant un arbre rotorique (41) relié à une partie de moyeu (51, 70, 90), avec verrouillage rotatif, au moyen d'une liaison par clavetage ou d'une liaison par serrage,
au moins deux ensembles regroupés étant implantés sur ladite partie de moyeu (51, 70, 90),
chaque ensemble regroupé comptant au moins deux disques respectifs (1) placés respectivement à distance l'un de l'autre, par l'intermédiaire d'une douille d'espacement (6),
des aimants permanents (2, 3) étant disposés sur chaque disque (1),
lesdits ensembles regroupés étant agencés en succession dans le sens axial,
la partie de moyeu (51, 70, 90) étant reliée par vissage à la douille d'espacement (6) faisant partie de l'ensemble regroupé considéré, et/ou aux disques (1) associés,
sachant qu'une vis, dont il est fait usage, est située à une distance radiale immuable et/ou est vissée dans un trou taraudé de ladite partie de moyeu,
la tête de ladite vis pressant les disques (1) et au moins une douille d'espacement (6) sur ladite partie de moyeu (51, 70, 90), dans le sens axial,
chaque pièce de réaction métallique et ensiforme étant interposée entre les aimants permanents (2, 3), se faisant mutuellement face, des disques (1) de l'ensemble regroupé considéré,
et le nombre des ensembles regroupés correspondant au nombre de pièces de réaction.

2. Dispositif d'entraînement selon la revendication 1,
**caractérisé par le fait que**
les aimants permanents (2, 3) sont mutuellement espacés d'intervalles réguliers dans la direction périphérique et/ou sont implantés sur les faces extrêmes des disques (1), situées en vis-à-vis mutuel, et/ou se trouvent à une même distance radiale.

3. Dispositif d'entraînement selon au moins l'une des revendications précédentes,
**caractérisé par le fait que**
la douille d'espacement (6) est interposée entre les deux disques respectifs (1) d'un ensemble regroupé considéré.

4. Dispositif d'entraînement selon au moins l'une des revendications précédentes,
**caractérisé par le fait que**
chaque disque (1) est relié par vissage à une douille d'espacement (6) respectivement associée, en particulier d'un ensemble regroupé considéré.

5. Dispositif d'entraînement selon au moins l'une des revendications précédentes,
**caractérisé par le fait que**
l'arbre rotorique (41) peut être entraîné par un moteur asynchrone, un moteur synchrone et/ou un moteur à réluctance.

6. Dispositif d'entraînement selon au moins l'une des revendications précédentes,
**caractérisé par le fait**
**qu'**une rondelle d'arrêt est reliée par vissage à l'arbre rotorique (41), en vue de l'arrêt axial,
ladite rondelle d'arrêt assurant l'arrêt axial de la partie de moyeu (51, 70, 90), au moins d'un côté,
sachant notamment que ladite partie de moyeu (51, 70, 90) est arrêtée axialement, sur l'autre côté axial, au moyen d'un décrochement dudit arbre rotorique (41).

7. Dispositif d'entraînement selon au moins l'une des revendications précédentes,
**caractérisé par le fait que**,
dans la zone d'espacement entre les disques (1),
une pièce métallique de réaction, de réalisation ensiforme, est respectivement interposée entre les aimants permanents (2, 3) desdits disques (1), qui se font mutuellement face, sachant que lesdits disques (1) sont agencés avec mobilité le long de la pièce de réaction, en particulier sur une pièce mobile, à guidage par rail le long de ladite pièce de réaction, ou
sachant que ladite pièce de réaction est agencée avec faculté de mouvement par rapport auxdits disques (1), laquelle pièce de réaction est notamment prévue sur une pièce mobile à guidage par rail.
